Europäisches Patentamt

European Patent Office

Office européen des brevets

(11) Veröffentlichungsnummer: **0 044 916**
**B1**

(12) **EUROPÄISCHE PATENTSCHRIFT**

(45) Veröffentlichungstag der Patentschrift: **21.01.87**

(21) Anmeldenummer: **81103973.4**

(22) Anmeldetag: **23.05.81**

(51) Int. Cl.⁴: **B 01 D 53/34**

(54) **Verfahren und Vorrichtung zum Entfernen von Schwefeldioxyd und anderen Schadstoffen aus Rauchgas.**

(30) Priorität: 24.05.80 DE 3020049
24.05.80 DE 3020016
08.07.80 DE 3025778
21.03.81 DE 3111268
04.04.81 DE 3113788
23.04.81 DE 3116086
28.04.81 DE 3116701
28.04.81 DE 3116702

(43) Veröffentlichungstag der Anmeldung:
03.02.82 Patentblatt 82/05

(45) Bekanntmachung des Hinweises auf die Patenterteilung:
21.01.87 Patentblatt 87/04

(84) Benannte Vertragsstaaten:
AT BE CH DE FR GB IT LI NL SE

(56) Entgegenhaltungen:
DE-A-2 532 373
DE-A-2 615 828
DE-B-1 291 048
FR-A-2 181 988
US-A-3 261 662
US-A-3 481 289
US-A-3 986 848

(73) Patentinhaber: **Hölter, Heinz, Dipl.-Ing.**
**Beisenstrasse 39-41**
**D-4390 Gladbeck (DE)**

(72) Erfinder: **Hölter, Heinz, Ing. (grad.)**
**Beisenstrasse 39-41**
**D-4390 Gladbeck (DE)**
Erfinder: **Gresch, Heinz, Ing. (grad.)**
**Franz-Lehar-Strasse 25**
**D-4600 Dortmund-Wickede (DE)**
Erfinder: **Igelbüscher, Heinrich, Ing. (grad.)**
**Marq-en-Baroeul-Strasse 60**
**D-4390 Gladbeck (DE)**
Erfinder: **Dewert, Heribert, Ing. (grad.)**
**Bahnhofstrasse 23**
**D-4390 Gladbeck (DE)**

(74) Vertreter: **Bode, Hans**
**Patentanwalt Bode, Hans, Dipl.-Ing. Postfach**
**1130 Weidtmannweg 5-9**
**D-4030 Ratingen 1 (DE)**

EP 0044 916 B1

Courier Press, Leamington Spa, England.

### Beschreibung

Die Erfindung betrifft ein Verfahren und eine Vorrichtung zum Entfernen von Schwefeldioxyd und anderen Schadstoffen, wie beispielsweise Chlorwasserstoff, Fluorwasserstoff und Stickoxyden aus Rauchgasen. Bei den Rauchgasen kann es sich um solche handeln, die bei der Verbrennung fossiler Brennstoffe entstehen, beispielsweise von Steinkohle, Braunkohle oder Erdöl in Kraftwerken, Heizkraftwerken und dergleichen, sowie um Rauchgase, die bei der Verbrennung anderer Stoffe und Stoffgemische wie beispielsweise von Müll entstehen. Hierzu ist es bekannt, das Rauchgas mit einer im Kreislauf gefahrenen Waschflüssigkeit in Kontakt zu bringen in der sich freie Calcium-Ionen befinden, die mit dem im Rauchgas enthaltenen Schwefeldioxyd und den anderen Schadstoffen unter Bildung der entsprechenden Calciumverbindungen reagieren. Das Calcium wird, der Waschflüssigkeit als Calciumoxyd, Calciumhydroxyd und gegebenenfalls teilweise auch als Calciumkarbonat zugesetzt. Die entstehenden unlöslichen Calciumverbindungen, in erster Linie Calciumsulfat in Form von Gips werden aus der Waschflüssigkeit durch Sedimentation in einer geeigneten Vorrichtung, beispielsweise in einem Doppelmantel-Sinkabscheider, entfernt und danach getrocknet und deponiert oder als Gips weiter verarbeitet. Durch geeignete Verfahrensführung und den Zusatz von Karbonsäuren zur Waschflüssigkeit läßt sich bei diesem Verfahren (DE—AS 25 32 373) ein außerordentlich hoher Reinigungsgrad und ein ebenfalls sehr hoher stöchiometrischer Wirkungsgrad in Bezug auf das eingesetzte Calciumoxyd erzielen. Andererseits ist es jedoch bei diesen, wie auch bei allen anderen nassen Verfahren von Nachteil, daß das Rauchgas bei der Reinigung stark abgekühlt werden muß. Es verläßt die Reinigungsvorrichtung mit einer Temperatur von nur etwa 55°C. Mit einer so niedrigen Temperatur darf das Rauchgas nicht in die Atmosphäre eingeleitet werden, da es sich dann in dieser nicht ausreichend verteilt. Außerdem liegt die Temperatur des Rauchgases unter dem Taupunkt der in ihm nach der Reinigung noch enthaltenen Säuren, so daß die Kanäle und Kamine, durch die das Rauchgas geführt wird, durch Korrosionen schwer geschädigt werden. Um diese Nachteile und Schäden zu vermeiden ist es erforderlich, das Rauchgas nach der Reinigung auf eine Temperatur von mindestens 100°C, also um etwa 45°C aufzuheizen. Da es sich in der Praxis als undurchführbar erwiesen hat hierfür Wärmetauscher zu verwenden, ist zum Aufheizen der Einsatz von Brennstoff erforderlich, wodurch nicht nur Abgase, die wiederum gereinigt werden müssen, entstehen sondern auch sehr hohe Kosten anfallen. Erfahrungsgemäß kostet die nasse Reinigung von Rauchgas etwa 1 Dpf pro erzeugte KwH, das Wiederaufheizen des Rauchgases kostet jedoch weitere 0,5 Dpf pro erzeugte KwH.

Der Erfindung liegt die Aufgabe zugrunde, ein Verfahren zum Entfernen von Schwefeldioxyd und anderen Schadstoffen aus Rauchgasen zu schaffen, wobei mit diesem Verfahren ein zumindest ebenso hoher Reinigungsgrad, eine zumindest ebenso gute stöchiometrische Ausnutzung des Calciumoxyds erreicht wird und bei dem das anfallende feste Reaktionsprodukt ebenso gut deponiefähig oder verarbeitbar ist, wie dies bei dem bekannten nassen Verfahren der Fall ist, bei dem jedoch das gereinigte Rauchgas eine Temperatur von mindestens 100°C aufweist, so daß ein Aufheizen des Rauchgases nicht erforderlich ist und die damit verbundenen Nachteile und Kosten entfallen.

Gegenstand der Erfindung ist ein Verfahren zum Entfernen von Schwefeldioxyd und anderen Schadstoffen aus Rauchgas, bei dem ein Rauchgasstrom mit einer Waschflüssigkeit in Kontakt gebracht wird, die Calciumhydroxid und gegebenenfalls Calciumoxid enthält, worauf die unlöslichen Calciumverbindungen aus der Waschflüssigkeit abgetrennt werden und die Waschflüssigkeit gegebenenfalls nach Zusatz von Calciumhydroxid und/oder Calciumoxid bei dieser Naßreinigung in einem Kreislauf geführt wird, dadurch gekennzeichnet, daß das Rauchgas in zwei Rauchgasströme aufgeteilt wird, der eine Rauchgasstrom der Naßreinigung zugeführt wird und aus dem zweiten Rauchgasstrom unter Verwendung von pulverförmigem Calciumoxid und/oder Calciumhydroxid als Sorptionsmittel die Schadstoffe trocken entfernt werden, daß die beiden Rauchgasströme vor dem Einleiten in die Atmosphäre vereinigt werden und daß das zur Trockenreinigung verwendete Sorptionsmittel ganz oder zum Teil der bei der Naßreinigung verwendeten Waschflüssigkeit zugesetzt wird.

Es ist an sich bekannt (DE—OS 26 15 828) Rauchgase trocken zu reinigen, indem das Rauchgas in innige Berührung mit einem Sorptionsmittel gebracht wird und wobei dieses Sorptionsmittel, es kann sich um pulverförmige reaktionsfähige Verbindungen von Alkali und/oder Erdalkalimetallen wie auch um Kalkhydrat handeln, mit dem im Rauchgas enthaltenen Schwefeldioxid und anderen Schadstoffen reagiert und diese weitgehend aus dem Rauchgas entfernt. Nach der Reaktion werden Gas und Sorptionsmittel voneinander getrennt und das Sorptionsmittel kann erneut in den Gasstrom eingebracht, also im Kreislauf gefahren werden. Um bei diesem Verfahren einen befriedigenden Reinigungsgrad zu erzielen muß jedoch mit einem hohen stöchiometrischen Überschuß an Sorptionsmittel gearbeitet werden. In der Praxis kann das Sorptionsmittel, selbst wenn es sich um Calciumoxid oder Calciumhydroxyd handelt, nur zur Hälfte ausgenutzt werden. Dies hat einerseits einen hohen Kostenaufwand für die Beschaffung von Sorptionsmitteln zur Folge und andererseits entsteht der Nachteil, daß das gebrauchte Sorptionsmittel nicht deponiert werden darf. Es ist zwar möglich, das gebrauchte Sorptionsmittel in einem gesonderten Prozeß zu Gips weiterzuverarbeiten, jedoch ist auch dies eine kostspielige Maßnahme.

Das Verfahren gemäß der Erfindung vermeidet sämtliche oben genannten Nachteile. Ein Erhitzen des gereinigten Rauchgases ist nicht erforderlich und als Reaktionsprodukt entsteht Gips, der sich sowohl zur Deponie als auch zur Weiterverarbeitung eignet. Außerdem wird das eingesetzte Calciumoxyd bzw. Calciumhydroxyd stöchiometrisch vollkommen ausgenutzt. Das in die Atmosphäre abgeleitete gereinigte Rauchgas verteilt sich dort schnell und gleichmäßig.

Bei einer bevorzugten Ausführungsform des Verfahrens gemäß der Erfindung findet die Vereinigung der Rauchgasfraktionen bereits vor der Einleitung in einer Kamin statt. Hierdurch werden Beschädigungen des Kamins und etwa vorgeschalteter Rauchgaskanäle durch kaltes, aus der Naßreinigung stammendes Rauchgas, vermieden.

In der Trockenreinigung wird das Sorptionsmittel in einen Kreislauf geführt, dem frisches Sorptionsmittel zugesetzt und aus dem gebrauchtes Sorptionsmittel entnommen wird. Auf diese Weise läßt sich mühelos ein solcher Ausnutzungsgrad des Sorptionsmittels in der Trockenreinigung einstellen, der einerseits zu einem hohen Reinigungsgrad in der Trockenreinigung führt und andererseits das aus dem Kreislauf der Trockenreinigung entnommene Sorptionsmittel für die Verwendung in der Naßreinigung besonders gut geeignet macht.

Vor der Einleitung in den Waschflüssigkeitskreislauf wird zweckmäßig das Sorptionsmittel gemahlen. Hierdurch werden neue freie Oberflächen geschaffen und die Raktionsfähigkeit des Sorptionsmittels wird erhöht. Es kann auch zweckmäßig sein, das Sorptionsmittel vor seinem Einleiten in den Waschflüssigkeitskreislauf der Naßreinigung zu Kalkmilch umzusetzen.

Andererseits ist es möglich, gebrauchtes aber noch nicht vollständig verbrauchtes Sorptionsmittel aus der Trockenreinigung in die Feuerung einzubringen, in der es dann vollständig oder nahezu vollständig mit dem Schwefeldioxyd des Rauchgases reagiert. Allein durch diese Maßnahme kann der Ausnutzungsgrad des Sorptionsmittels, der in der Trockenreinigung etwa 50% beträgt, auf über 80% heraufgesetzt werden.

Es ist zweckmäßig, die Trockenreinigung so auszubilden, daß das Rauchgas mit dem Sorptionsmittel zunächst durch eine oder mehrere Kontaktstrecken und danach durch ein Filter geführt wird, in dem das Sorptionsmittel vom Rauchgas abgetrennt wird. In den Kontaktstrecken findet eine intensive Durchmischung des Rauchgases mit dem Sorptionsmittel und eine entsprechend weitgehende Reaktion des Sorptionsmittels mit den im Rauchgas enthaltenen Schadstoffen statt, die im Filter, in dem das Sorptionsmittel vom Rauchgas abgetrennt wird, noch fortgesetzt wird.

Gemäß einer weiteren Ausführungsform des Verfahrens gemäß der Erfindung wird das Rauchgas in einer vorgeschalteten Vorreinigungsstufe zunächst trocken vorgereinigt, worauf ein Teil des vorgereinigten Gases der Trockenreinigung und ein anderer Teil des vorgereinigten Gases der Naßreinigung zugeführt wird. Hierbei wird, wie bisher beschrieben, frisches Sorptionsmittel der Trockenreinigung zugeführt, jedoch kann das aus dem Kreislauf der Trockenreinigung entnommene gebrauchte Sorptionsmittel ganz oder teilweise der Vorreinigungsstufe zugeführt werden, wo es weiter angereichert und dann der Naßreinigungsstufe zugeführt wird. Durch diese Maßnahme läßt sich der Ausnutzungsgrad des Sorptionsmittels bei der trockenen Gasreinigung nochmals erhöhen und/oder es kann, wenn gewünscht, der Anteil des naßgereinigten Gases reduziert werden. Dies kann deshalb von Vorteil sein, weil der Energieverbrauch bei der Naßreinigung höher ist als der bei der Trockenreinigung.

Bei der Naßreinigung ist es bekannt, durch Zugabe von Karbonsäuren zur Waschflüssigkeit das Angebot an freien Calcium-Ionen in der Waschflüssigkeit zu erhöhen, wodurch die Reaktionsgeschwindigkeit erhöht und die Menge der umlaufenden Waschflüssigkeit vermindert werden kann. Gemäß einem weiteren Merkmal der Erfindung wird der Waschflüssigkeit und/oder dem Sorptionsmittel bei der Trockenreinigung Piperazin, insbesondere in Form von Piperazin-Hexahydrat und/oder Piperazin-Citrat zugegeben. Bei der Naßreinigung werden hierdurch gleich gute oder bessere Resultate als bei Zugabe von Karbonsäuren erreicht, auch wenn die zugegebene Menge nur die Hälfte bis ein Viertel derjenigen Menge beträgt, die an Karbonsäuren zugegeben werden muß. Überraschenderweise werden entsprechende Resultate aber auch dann erreicht, wenn das Piperazin, bzw. seine obengenannten Verbindungen, dem Sorptionsmittel bei der Trockenreinigung zugegeben werden. Ein weiterer besonderer Vorteil ist darin zu sehen, daß Piperazin und seine obengenannten Verbindungen toxisch absolut einwandfrei sind und einen Verdampfungspunkt von mehr als 100°C besitzen.

Gemäß einem weiteren Merkmal der Erfindung wird bei der Naßreinigung die Oxydation der Waschflüssigkeit in mehreren Stufen durchgeführt, wobei den Stufen Sorptionsmittel aus der Trockenreinigung und gegebenenfalls der Vorreinigungsstufe in solchen Mengen und gegebenenfalls der letzten Stufe Calciumhydroxyd oder Kalkmilch in solcher Menge zugesetzt wird, daß der pH-Wert der Waschflüssigkeit von Stufe zu Stufe nur geringfügig zunimmt und erst in der letzten Stufe auf etwa 7,5 ansteigt. Bei dieser Verfahrensweise erfolgt die Oxydation des in der Waschflüssigkeit enthaltenen und ihr auch mit dem Sorptionsmittel aus der Trockenreinigung zugegebenen Calciumsulfits in den ersten Oxydationsstufen bei pH-Werten von weniger als 6, vorzugsweise von etwa um 4,5 zu Calciumsulfat auf dem Wege über Calciumbisulfit, wodurch ein besonders leicht separierbarer und zur Weiterverarbeitung besonders gut geeigneter Gips gewonnen wird.

Beim Abtrennen des Sorptionsmittels von dem gereinigten Rauchgas in der Trockenreinigung, mit Hilfe von Gewebefiltern, wird das Gas mit dem Sorptionsmittel zweckmäßig von oben nach unten fallend durch die Gewebefilter geführt. Die Filterflächen sollen eine große Höhe besitzen, die mindestens 3, vorzugsweise um 5 Meter betragen soll und können mit Stützleisten oder Stützringen versehen sein, die ein ungewünschtes Hinunterfallen des Sorptionsmittels von den Filterflächen verhindern. Hierdurch wird eine Fortsetzung der Chemisorptionsreaktion zwischen dem Rauchgas und dem Sorptionsmittel noch auf den Filterflächen erreicht und damit eine Erhöhung des Reinigungsgrades. Hierzu trägt weiterhin bei, daß sich nur ein kleiner Teil der Filterflächen, vorzugsweise nicht mehr als 2%, zur gleichen Zeit in der Abreinigung befinden.

In der nachfolgenden Beschreibung sind Ausführungsbeispiele des Verfahrens gemäß der Erfindung und der zu seiner Durchführung dienenden Vorrichtung beschrieben.

In den Zeichnungen zeigt

Figur 1 eine schematische Darstellung des Verfahrens und der zu seiner Durchführung dienenden Gesamtanlage.

Figur 2 zeigt in stark vereinfachter schematischer Darstellung eine Abwandlung des Verfahrens.

Figur 3 zeigt, ebenfalls stark vereinfacht, einen senkrechten Schnitt durch ein Gewebefilter und

Figur 4 zeigt einen senkrechten Schnitt durch ein Filterelement des Gewebefildeters gemäß Figur 3.

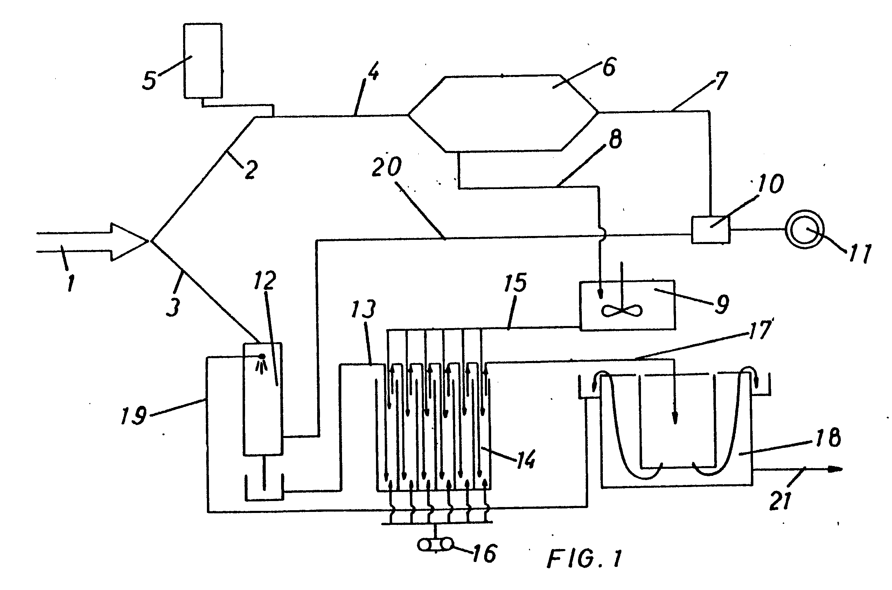

In Figur 1 ist, vereinfacht, der Ablauf einer ersten Ausführungsform des Verfahrens gemäß der Erfindung dargestellt. Mit 1 ist der zu reinigende Rauch- oder Abgasstrom dargestellt. Es kann sich um das trockene Rauchgas eines Kohlekraftwerkes handeln, das eine Temperatur von etwa 180°C aufweist. Dieser Rauchgasstrom wird in Teilströme 2 und 3 geteilt. Im Ausführungsbeispiel enthalten die Rauchgasströme 2 und 3 je die Hälfte des im Strom 1 vorhandenen Rauchgases. Der Rauchgasstrom 2 wird einer Trockenreinigung zugeführt. Bei der Trockenreinigung kann es sich um ein Verfahren und um eine solche Anlage handeln, wie sie in der DE—OS 26 15 828 detailliert beschrieben ist. In der nachfolgenden Beschreibung sind die Darstellung des Verfahrens und der Vorrichtung stark vereinfacht. Das Rauchgas strömt in eine Kontaktstrecke 4 ein in der ihm aus einem Vorratsbehälter 5 ein Sorptionsmittel zugesetzt wird. Bei dem Sorptionsmittel kann es sich beispielsweise um trockenes pulverförmiges Calciumoxyd handeln. In der Kontaktstrecke 4 werden das Rauchgas und das Sorptionsmittel intensiv miteinander vermischt. Dies wird durch in der Kontaktstrecke angeordnete, in der DE—OS 26 15 828 näher beschriebene Einbauten erreicht. Mindestens ein Teil des dem Rauchgas zugegebenen pulverförmigen Calciumoxyds wird in der Kontaktstrecke nochmals zerbrochen und zerkleinert, so daß weitere Oberflächen freigelegt werden. Auch wird ein Teil des Calciumoxyds durch im Rauchgas vorhandenen Wasserdampf zu Calciumhydroxyd umgewandelt. Beide Calciumverbindungen reagieren mit dem im Rauchgas vorhandenen Schwefeldioxyd unter Bildung von Calciumsulfat und Calciumsulfit. Im Ausführungsbeispiel wird dem Rauchgas eine solche Menge an Calciumoxyd zugegeben, wie sie zweifach stöchiometrisch dem im Rauchgas vorhandenen Schwefeldioxad entspricht. Die Abtrennung des Sorptionsmittel vom gereinigten Rauchgas erfolgt in einem Gewebefilter 6. Auch innerhalb des Gewebefilters kann noch eine Reaktion des Rauchgases mit dem Calciumoxyd und Calciumhydroxyd stattfinden. Das gereinigte und vom Sorptionsmittel befreite Rauchgas wird über eine Leitung 7 einer Mischkammer 10 zugeführt und geht von dort in einen Kamin 11. Das abgeschiedene Sorptionsmittel, ein Gemisch aus Calciumoxyd, Calciumhydroxyd, Calciumsulfat und Calciumsulfit wird über eine Leitung 8 einer Kalkmilch aufbereitungsvorrichtung 9 zugeführt. Abweichend vom dargestellten Ausführungsbeispiel kann ein Teil des gebrauchten Sorptionsmittels jedoch auch wieder erneut zur Trockenreinigung verwendet werden.

Der mit 3 bezeichnete Rauchgasteilstrom wird naß gereinigt. Hierzu wird er einem Gaswäscher 12 zugeführt. Nach der Reinigung wird er über eine Leitung 20 in die Mischkammer 10 geleitet, wo eine Vermischung mit dem durch die Leitung 7 zugeführten trockenen Rauchgas erfolgt. Das Gemisch wird in den Kamin 11 geleitet. Das Naßreinigungsverfahren und die zu seiner Durchführung dienende Anlage sind hier nur stark vereinfacht beschrieben. Eine detaillierte Darstellung befindet sich in der DE—AS 25 32 373. Zur nassen Reinigung dient eine im Kreislauf geführte Waschflüssigkeit, die dem Gaswäscher 12 über eine Leitung 19 zugeführt wird. Diese Waschflüssigkeit enthält unter anderem Calciumoxyd und Calciumhydroxyd, wobei diese Verbindungen in hohem Grade dissoziiert sind und auch im Wascher weiterhin dissoziieren, so daß zur Entfernung des Schwefeldioxyds aus dem Rauchgas ein großes Angebot an freien Calciumionen zur Verfügung steht. Nach dem Durchlauf durch den Wascher 12 wird die Waschflüssigkeit über eine Leitung 13 einer Oxydationsvorrichtung 14 zugeführt. Diese Oxydationsvorrichtung und ihre Wirkungsweise werden weiter unten näher beschrieben werden. In die Oxydationsvorrichtung 14 wird durch ein Gebläse 16 Luft eingeblasen und außerdem wird ihr durch eine Leitung 15 aus der Kalksmiilchaufbereitungsvorrichtung 9 Kalkmilch zugeführt. Die oxydierte und mit Kalkmilch versetzte Waschflüssigkeit verläßt die Oxydationsvorrichtung 14 über eine Leitung 17 und gelangt in einen Doppelmantelsinkabscheider 18. In diesem wird das in der Waschflüssigkeit gebildete Calciumsulfat abgeschieden. Die weitgehend klare Waschflüssigkeit verläßt den Doppelmantelsinkabscheider und wird durch die Leitung 19 in den Gaswascher 12 zurückgeführt. Der Gips verläßt den Doppelmantelsinkabscheider 18 durch die Leitung 21.

Zum Transport des Rauchgases durch die Reinigungsvorrichtungen können in den Leitungen 7 und 20 Ventilatoren angeordnet sein, die jedoch in der Zeichnung nicht dargestellt sind.

Die Temperatur des Rauchgases bei 1 beträgt, wie oben angegeben, 180°C. In der Leitung 7 ist die Temperatur nur unwesentlich geringer. In der Leitung 20 hat das naßgereinigte Rauchgas eine Temperatur von etwa 55°C. Wenn, wie oben gesagt, das Rauchgas gleichmäßig auf die Teilströme 2 und 3 aufgeteilt wird, so ergibt sich in der Mischkammer 10 eine Temperatur von etwa 117°C. Dies hat zur Folge, daß das Rauchgas bei dieser Temperatur ohne weiteres in den Kamin 11 eingeleitet werden kann. Die Temperatur von 117°C liegt über dem Taupunkt von noch im Gas befindlich aggressiven Säuren, insbesondere von Chlorwasserstoff und die Temperatur ist hoch genug, um eine einwandfreie Vermischung und Ausbreitung des aus dem Kamin austretenden Rauchgases in der Atmosphäre zu gewährleisten. Es ist nicht erforderlich, das Rauchgas vor dem Einleiten in den Kamin aufzuheizen. Die hierdurch erzielbaren finanziellen Ersparnisse sind bereits eingangs angegeben worden. Es darf jedoch auch nicht übersehen werden, daß sich hierdurch eine erhebliche Einsparung an Kraftwerksleistung erzielen läßt. Während für den Betrieb der Reinigungsanlagen, für deren Stromverbrauch durch Pumpen, Ventilatoren und dergleichen etwa 1% der installierten Kraftwerksleistung erforderlich sind, würden für das Wiederaufheizen des Rauchgases weitere 3% der installierten Kraftwerksleistung erforderlich sein.

Die in Figur 1 dargestellte Oxydationsvorrichtung 14 unterscheidet sich von derjenigen, die aus der DE—AS 25 32 373 zum Stande der Technik gehört. Die erstere ist mehrstufig aufgebaut und wird so betrieben, daß den Stufen Sorptionsmittel aus der Trockenreinigung und gegebenenfalls aus einer später zu beschreibenden Vorreinigungsstufe in solchen Mengen zugesetzt und gegebenenfalls der letzten Stufe Calciumhydroxid oder Kalkmilch in einer solchen Menge zugesetzt wird, daß der pH-Wert der Waschflüssigkeit von Stufe zu Stufe nur geringfügig zunimmt und erst in der letzten Stufe auf etwa 7,5 ansteigt. So wird in den ersten Stufen der pH-Wert unterhalb 6, vorzugsweise um 4,5 gehalten, wodurch die Oxydation der sowohl aus dem Wascher 12 als auch aus der Trockenreinigungsstufe zugeführten Stoffe, insbesondere von Calciumbisulfit und Calciumsulfit zu einem Calciumsulfat erfolgt, das im Doppelmantelsinkabscheider 18 leicht von der Waschflüssigkeit abgetrennt werden kann und das sehr gut dehydrierbar und sehr gut zur Weiterverarbeitung geeignet ist.

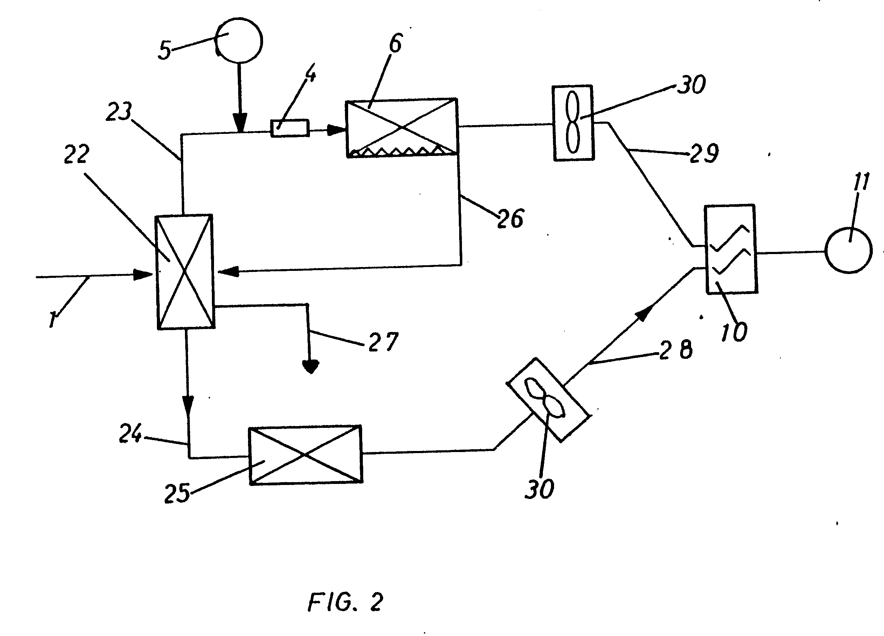

Eine abgeänderte Ausführungsform des Verfahrens gemäß der Erfindung ist in der Figur 2 dargestellt. Hier wird der ungereinigte Rauchgasstrom 1 zunächst in einer Vorreinigungsstufe 22 trocken vorgereinigt. Ein Teilstrom des trocken vorgereinigten Rauchgases wird über 23 einer Trockenreinigung und ein weiterer Teilstrom über 24 einer Naßreinigung 25 zugeführt. Die Trockenreinigung besteht wiederum aus einer Sorptionsmittelzugabe 5, einer Kontaktstrecke 4 und einem Chemisorptionsfilter 6. Diese Vorrichtungen sind ähnlich ausgebildet wie diejenigen, die oben anhand von Figur 1 beschrieben worden sind und haben eine ähnliche Wirkungsweise. Ein Teil des im Chemisorptionsfilter 6 abgeschiedenen Sorptionsmittels wird über eine Leitung 26 der Vorreinigungsstufe 22 zugeführt. Die Vorreinigungsstufe 22 ist im Ausführungsbeispiel als Wirbelbettreaktor ausgebildet. Sie arbeitet derart, daß der vorgereinigte Rauchgasstrom 23 wenig oder kein Sorptionsmittel enthält. Das in der Vorreinigungsstufe 22 gebrauchte Sorptionsmittel wird, zumindest zum Teil, über eine Leitung 27 der Naßreinigung 25 zugeführt. Die Naßreinigung ist in Figur 2 ebenfalls stark vereinfacht dargestellt, im einzelnen entspricht sie im wesentlichen der in Figur 1 dargestellten Naßreinigung. Das trocken-gereinigte Rauchgas wird über eine Leitung 29 und das naßgereinigte Rauchgas über eine Leitung 28 der Mischkammer 10 zugeführt und gelangt von dieser in den Kamin 11. Ventilatoren 29 und 30 dienen zum Transport des Rauchgases.

Da bei der anhand Figur 2 dargestellten Ausführungsform des Verfahrens gemäß der Erfindung das bei 5 zugesetzt Sorptionsmittel auf ein in 22 bereits vorgereinigtes Rauchgas trifft, erhöht sich, ohne daß eine größere Menge an frischem Sorptionsmittel zugegeben werden muß, das stöchiometrische Verhältnis der wirksamen Bestandteile des Sorptionsmittels zu dem in der Trockenreinigung enthaltenen Schwefeldioxyd erheblich, beispielsweise von 2:1 auf 3:1, so daß in der Trockenreinigung ein erheblich erhöhter Reinigungsgrad auftritt. Eine Beeinträchtigung des Reinigungsgrades in der Naßreinigung findet hierdurch jedoch nicht statt. Insgesamt kann der Reinigungsgrad der Gesamtvorrichtung erhöht oder der Anteil des trocken gereinigten Rauchgases auf Kosten des naß gereinigten Rauchgases erhöht und hierdurch der Energieverbrauch der Gesamtanlage vermindert werden.

In Abänderung des anhand von Figur 2 beschriebenen Verfahrens ist es auch möglich, einen erheblichen Teil des in der Vorreinigungsstufe 22 gebrauchten Sorptionsmittels in der Trockenreinigung erneut zu verwenden, wie es auch möglich ist, das im Chemisorptionsfilter 6 abgeschiedene Sorptionsmittel zum Teil in die Vorreinigungsstufe 22 und zum anderen Teil in die Naßreinigung 25 zu führen.

Bei dem in der DE—OS 25 32 373 beschriebenen Naßreinigungsverfahren werden der umlaufenden Waschflüssigkeit zur Erhöhung des Dissoziationsgrades Carbonsäuren zugesetzt. Bei einer weiteren Ausgestaltung des Verfahrens gemäß der Erfindung wird der Waschflüssigkeit bei der Naßreinigung zur Erhöhung des Dissoziationsgrades Piperazin und/oder Piperazin-Hexahydrat und/oder Piperazin-Citrat zugesetzt. Diese Stoffe brauchen nur in einer wesentlich geringeren Menge, etwa der Hälfte bis einem Fünftel derjenigen von Carbonsäuren zugesetzt werden, um die gleiche oder eine bessere Wirkung zu erhalten, zu dem sind diese Stoffe toxisch völlig einwandfrei und haben Dampfpunkte von über 100°C. Überraschenderweise hat sich gezeigt, daß diese Stoffe sich auch zum Zusatz zum Sorptionsmittel in der Trockensorption eignen und dort eine ähnliche Wirkung entfalten.

Bei der Trockenreinigung können besondere Vorteile dadurch erreicht werden, daß bei einer weiteren Ausgestaltung des Verfahrens gemäß der Erfindung, zur Trennung von Gas und Sorptionsmittel das sorptionsmittelhaltende Gas von oben nach unten fallend durch Gewebefilter geführt wird, von denen im Durchschnitt nicht mehr als 2% der Filterfläche zur gleichen Zeit abgereinigt werden. Es werden Filterflächen verwendet, die eine große Höhe, mindestens 3 m, besser um 5 m aufweisen und die zusätzlich Stützleisten oder Stützringe auf den Gewebeflächen aufweisen, durch die ein Abrutschen des Sorptionsmittels von den Gewebeflächen verhindert wird. Durch diese Maßnahmen wird erreicht, daß sogar noch im Gewebefilter eine nennenswerte Reaktion zwischen Sorptionsmittel und Rauchgas stattfindet. Hierdurch ist es möglich, entweder den Reinigungsgrad zu erhöhen oder mit einem verringerten stöchiometrischen Verhältnis der wirksamen Bestandteile des Sorptionsmittels zu den Schadstoffen im Rauchgas auszukommen.

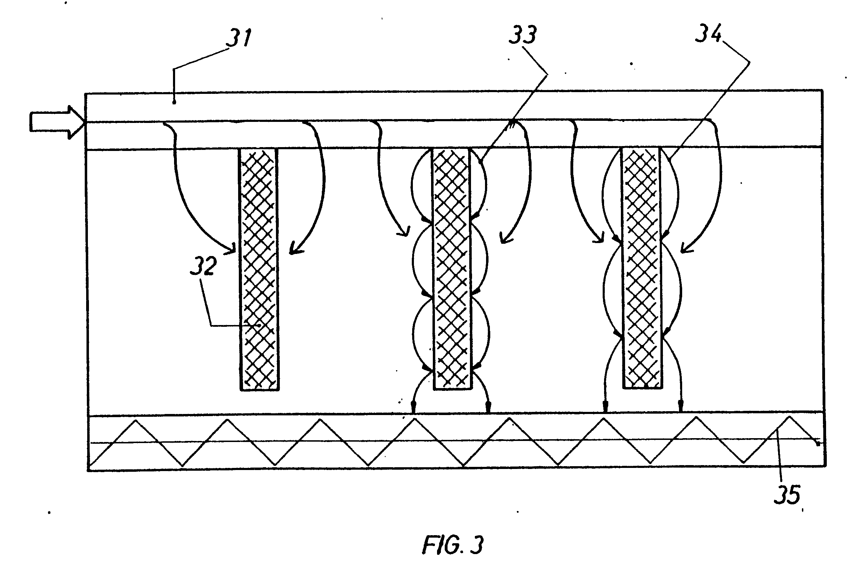

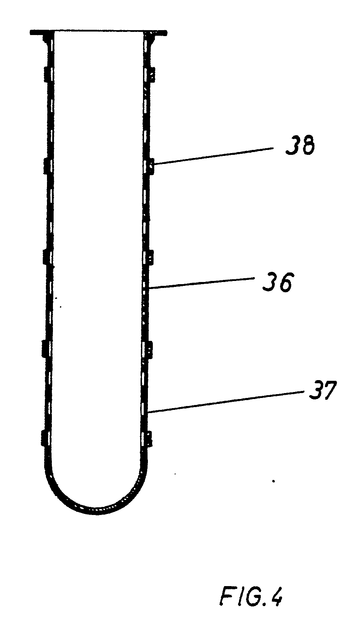

Diese, ebenfalls einen Gegenstand der Erfindung bildenden Filter sind anhand der Figuren 3 und 4 als Ausführungsbeispiele dargestellt. In Figur 3 ist mit 31 der Rohgaskanal bezeichnet. Die Filterelemente sind mit 32 bezeichnet. Es handelt sich um taschenförmig oder schlauchförmig ausgebildete Gewebefilter-Elemente.

In den Rauchgaskanal 31 kann nicht nur das mit dem gebrauchten Sorptionsmittel vermischte Rauchgas sondern erforderlichenfalls auch frisches Sorptionsmittel eingeblasen werden. Rauchgas und Sorptionsmittel treten fallend in die Filtereinheiten 32 ein, deren Filterflächen wesentlich höher als breit sind und, wie oben gesagt, eine Höhe von mindestens 3, besser jedoch von 5 m aufweisen. Beim Abreinigen der Filterelemente wird durch geeignete Wahl von hohen Rüttelfrequenzen 33 und niedrigen Rüttelfrequenzen 34 mit entsprechenden Amplituden und durch geeignete Wahl der Rüttelzeiten erreicht, daß sich stets beträchtliche Mengen von Sorptionsmitteln auf den Filterflächen befinden und dort mit dem Rauchgas reagieren können. In dem in Figur 3 dargestellten Filter wird das herabgefallene Sorptionsmittel in einem Staubkanal 35 durch eine Schnecke, ein Kratzband oder dergleichen, abgeführt.

Das ungewollte hinabfallen von Sorptionsmittel von den Filterflächen, wird, wie in Figur 4 erkennbar, durch Stützringe oder Stützleisten 38 verhindert, die auf dem mit 37 bezeichneten Filtertuch angeordnet sind, das wiederum gegen eine Rahmenkonstruktion, Lochplatte oder dergleichen 36 anliegt.

**Patentansprüche**  -

1. Verfahren zum Entfernen von Schwefeldioxyd und anderen Schadstoffen aus Rauchgas, bei dem ein Rauchgasstrom mit einer Waschflüssigkeit in Kontakt gebracht wird, die Calciumhydroxid und gegebenenfalls Calciumoxyd enthält, worauf die unlöslichen Calciumverbindungen aus der Waschflüssigkeit abgetrennt werden und die Waschflüssigkeit gegebenenfalls nach Zusatz von Calciumhydroxid und/oder Calciumoxyd bei dieser Naßreinigung in einem Kreislauf geführt wird, dadurch gekennzeichnet, daß das Rauchgas in zwei Rauchgasströme aufgeteilt wird, der eine Rauchgasstrom der Naßreinigung zugeführt wird und aus dem zweiten Rauchgasstrom unter Verwendung von pulverförmigen Calciumoxyd und/oder Calciumhydroxid als Sorptionsmittel die Schadstoffe trocken entfernt werden, daß die beiden Rauchgasströme vor dem Einleiten in die Atmosphäre vereinigt werden und daß das zur Trockenreinigung verwendete Sorptionsmittel ganz oder zum Teil der bei der Naßreinigung verwendeten Waschflüssigkeit zugesetzt wird.

2. Verfahren nach Anspruch 1, dadurch gekennzeichnet, daß die Rauchgasströme vor der Einleitung in einen Kamin vereinigt werden.

3. Verfahren nach einem oder mehreren der Ansprüche 1 und 2, dadurch gekennzeichnet, daß das Sorptionsmittel in der Trockenreinigung in einem Kreislauf geführt wird, dem frisches Sorptionsmittel zugesetzt und aus dem gebrauchtes Sorptionsmittel entnommen wird.

4. Verfahren nach einem oder mehreren der Ansprüche 1 bis 3, dadurch gekennzeichnet, daß das gebrauchte Sorptionsmittel vor der Einleitung in den Waschflüssigkeitskreislauf zerkleinert wird.

5. Verfahren nach einem oder mehreren der Ansprüche 1 bis 4, dadurch gekennzeichnet, daß das gebrauchte Sorptionsmittel vor der Einleitung in den Waschflüssigkeitskreislauf zu Kalkmilch umgesetzt wird.

6. Verfahren nach einem oder mehreren der Ansprüche 1 bis 5, dadurch gekennzeichnet, daß gebrauchtes Sorptionsmittel aus der Trockenreinigung in die Feuerung eingebracht wird.

7. Verfahren nach einem oder mehreren der Ansprüche 1 bis 6, dadurch gekennzeichnet, daß zur Trockenreinigung das Rauchgas mit dem Sorptionsmittel zuerst durch eine oder mehrere Kontaktsstrecken und danach durch ein Filter geführt wird, in dem das Sorptionsmittel vom Rauchgas abgetrennt wird.

8. Verfahren nach einem oder mehreren der Ansprüche 1 bis 7, dadurch gekennzeichnet, daß das Rauchgas in einer vorgeschalteten Vorreinigungsstufe trocken vorgereinigt wird, worauf ein Teil des vorgereinigten Gases der Trockenreinigung und ein anderer Teil des vorgereinigten Gases der Naßreinigung zugeführt wird.

9. Verfahren nach Anspruch 8, dadurch gekennzeichnet, daß das aus dem Sorptionsmittel-Kreislauf der Trockenreinigung entnommene gebrauchte Sorptionsmittel vollständig oder teilweise der Vorreinigungsstufe zugeführt wird.

10. Verfahren nach Anspruch 8 und/oder 9, dadurch gekennzeichnet, daß aus der Vorreinigungsstufe entnommenes, gebrauchtes Sorptionsmittel der Naßreinigung zugeführt wird.

11. Verfahren nach einem oder mehreren der Ansprüche 8 bis 10, dadurch gekennzeichnet, daß aus der Vorreinigungsstufe entnommens, gebrauchtes Sorptionsmittel ganz oder teilweise der Trockenreinigung zugeführt wird.

12. Verfahren nach einem oder mehreren der Ansprüche 1 bis 11, dadurch gekennzeichnet, daß die Waschflüssigkeit und/oder das pulverförmige Sorptionsmittel Piperazin und/oder Piperazin-Hexahydrat und/oder Piperazin-Citrat enthält.

13. Verfahren nach einem oder mehreren der Ansprüche 1 bis 12, dadurch gekennzeichnet, daß bei der Naßreinigung die Oxidation der Waschflüssigkeit in mehreren Stufen durchgeführt wird, wobei den Stufen Sorptionsmittel aus der Trockenreinigung und gegebenenfalls der Vorreinigungsstufe in solchen Mengen und gegebenenfalls der letzten Stufe Calcium-Hydroxyd oder Kalkmilch in solcher Menge zugesetzt wird, daß der pH-Wert der Waschflüssigkeit von Stufe zu Stufe nur geringfügig zunimmt und erste in der letzten Stufe auf etwa 7,5 ansteigt.

14. Verfahren nach einem oder mehreren der Ansprüche 1 bis 13, dadurch gekennzeichnet, daß das Gas mit dem Sorptionsmittel bei der Trockenreinigung von oben nach unten fallend durch Gewebefilter geführt wird, von denen im Durchschnitt nicht mehr als 2% der Filterfläche zur gleichen Zeit abgereinigt werden.

15. Vorrichtung zur Durchführung des Verfahrens nach Anspruch 14, dadurch gekennzeichnet, daß die Filterelemente eine Höhe von mehr als 3,5 m, vorzugsweise von etwa 5 m aufweisen und die Filterflächen mit Stützleisten oder Stützringen für das Sorptionsmittel versehen sind.

**Revendications**

1. Procédé pour éliminer le dioxyde de soufre et d'autres polluants d'un gaz de combustion, suivant lequel un courant de gaz de combustion est mis en contact avec un liquide de lavage qui contient de l'hydroxyde de calcium et éventuellement de l'oxyde de calcium, après quoi les composés calciques insolubles sont séparés hors du liquide de lavage et le liquide de lavage, éventuellement après addition d'hydroxyde de calcium et/ou d'oxyde de calcium, est conduit dans un circuit pour cette épuration humide, caractérisé en ce que le gaz de combustion est réparti en deux courants de gaz de combustion, le premier courant de gaz de combustion est amené à l'épuration humide et les polluants sont éliminés à sec du deuxième courant de gaz de combustion en utilisant de l'oxyde de calcium et/ou de l'hydroxyde de calcium pulvérulent comme agent de sorption, les deux courants de gaz de combustion sont réunis avant d'être relâchés à l'atmosphère et l'agent de sorption utilisé pour l'épuration à sec est ajouté pour tout ou partie au liquide utilisé pour l'épuration humide.

2. Procédé suivant la revendication 1, caractérisé en ce que les courants de gaz de combustion sont réunis avant l'admission dans une cheminée.

3. Procédé suivant une ou plusieurs des revendications 1 et 2, caractérisé en ce que l'agent de sorption est introduit lors de l'épuration à sec dans un circuit dans lequel de l'agent de sorption frais est ajouté et hors duquel de l'agent de sorption usé est prélevé.

4. Procédé suivant une ou plusieurs des revendications 1 à 3, caractérisé en ce que l'agent de sorption usé est subdivisé avant l'introduction dans le circuit du liquide de lavage.

5. Procédé suivant une ou plusieurs des revendications 1 à 4, caractérisé en ce que l'agent de sorption usé est transformé en lait de chaux avant l'introduction dans le circuit du liquide de lavage.

6. Procédé suivant une ou plusieurs des revendications 1 à 5, caractérisé en ce que l'agent de sorption usé de l'épuration à sec est introduit dans le foyer.

7. Procédé suivant une ou plusieurs des revendications 1 à 6, caractérisé en ce que pour l'épuration à sec le gaz de combustion avec l'agent de sorption est conduit d'abord par une ou plusieurs sections de contact et ensuite par un filtre dans lequel l'agent de sorption se sépare du gaz de combustion.

8. Procédé suivant une ou plusieurs des revendications 1 à 7, caractérisé en ce que le gaz de combustion est soumis d'abord à une épuration à sec préalable dans un étage d'épuration préalable en amont, après quoi une partie du gaz épuré au préalable est amenée à l'épuration à sec et une autre partie du gaz épuré au préalable est amenée à l'épuration humide.

9. Procédé suivant la revendication 8, caractérisé en ce que l'agent de sorption usé prélevé hors du circuit d'agent de sorption de l'épuration à sec est amené pour tout ou partie à l'étage d'épuration préalable.

10. Procédé suivant les revendications 8 et/ou 9, caractérisé en ce que l'agent de sorption usé prélevé à l'étage d'épuration préalable est amené à l'épuration humide.

11. Procédé suivant une ou plusieurs des revendications 8 à 10, caractérisé en ce que l'agent de sorption usé prélevé à l'étage d'épuration préalable est amené pour tout ou partie à l'épuration à sec.

12. Procédé suivant une ou plusieurs des revendications 1 à 11, caractérisé en ce que le liquide de lavage et/ou l'agent de sorption pulvérulent contiennent de la pipérazine et/ou de la pipérazine hexahydratée et/ou du citrate de pipérazine.

13. Procédé suivant une ou plusieurs des revendications 1 à 12, caractérisé en ce que lors de l'épuration humide, l'oxydation du liquide de lavage est exécutée dans plusieurs étages, de l'agent de sorption provenant de l'épuration à sec et éventuellement de l'étage d'épuration préalable étant admis aux étages en quantités telles et de l'hydroxyde de calcium ou du lait de chaux étant éventuellement admis au dernier étage en quantité telle que le pH du liquide de lavage n'augmente que faiblement d'un étage à l'autre et n'atteigne environ 7,5 que dans le dernier étage.

14. Procédé suivant une ou plusieurs des revendications 1 à 13, caractérisé en ce que le gaz avec l'agent de sorption est conduit lors de l'épuration à sec de haut en bas à travers des filtres textiles dont en moyenne pas plus de 2% de la surface filtrante ne sont nettoyés au même moment.

15. Appareil pour l'exécution du procédé suivant la revendication 14, caractérisé en ce que les éléments filtrants ont une hauteur de plus de 3,5 mètres, de préférence d'environ 5 mètres, et les surfaces filtrantes sont munies de cadres de support ou d'anneaux de support pour l'agent de sorption.

**Claims**

1. Process for the removal of sulphur dioxide and other polutants from flue gas, in which a stream of flue gas is brought into contact with a cleaning fluid which contains calcium hydroxide and if necessary calcium oxide, in which the insoluble calcium compounds are separated from the cleaning liquid and the cleaning liquid can, if required be recirculated through the wet cleaning system after the addition of calcium hydroxide and/or calcium oxide, characterised in that the flue gas is separated into two streams of which one stream is wet cleaned and the pollutants are removed from the other in a dry process by use of powdered calcium oxide and/or calcium hydroxide as the absorbent material, and in that the two streams of flue gas are combined before being re-introduced to the atmosphere and that some or all of the absorbent material used in the dry cleaning process is added to the fluid used in the wet cleaning process.

2. Process according to claim 1, characterised in that the flue gas streams are combined before passing into a chimney.

3. Process according to one or more of claims 1 and 2, characterised in that the absorbent material in the dry cleaning process is passed through a circuit to which fresh absorbent material is added and from which used absorbent material is removed.

4. Process according to one or more of claims 1 to 3, characterised in that the used absorbent material is ground up before its introduction to the wet cleaning circuit.

5. Process according to one or more of claims 1 to 4, characterised in that the used absorbent material is converted into milk of lime before being added to the cleaning liquid circuit.

6. Process according to one or more of claims 1 to 5, characterised in that used absorbent material from the dry cleaning process is passed into the furnace.

7. Process according to one or more of claims 1 to 6, characterised in that during the dry cleaning process the flue gas is first brought into contact one or more times with the absorbent material and is then passed through a filter, in which the absorbent material is separated from the flue gas.

8. Process according to one or more of claims 1 to 7, characterised in that the flue gas is dry cleaned in a pre-purifying stage connected as part of the system, after which one part of the pre-purified gas is then dry cleaned and the other is wet cleaned.

9. Process according to claim 8, characterised in that all or some of the used absorbent material taken from the absorbent material circuit of the dry cleaning process is added to the pre-purifying stage.

10. Process according to claim 8 and/or 9 characterised in that the used absorbent material taken from the pre-purifying stage is added to the wet cleaning process.

11. Process according to one or more of claims 8 to 10, characterised in that some or all of the used absorbent material removed from the pre-purifying stage is added to the dry cleaning process.

12. Process according to one or more of claims 1 to 11, characterised in that the cleaning fluid and/or the powdered absorbent material contains piperazine and/or piperazine-hexahydrate and/or piperazine-citrate.

13. Process according to one or more of claims 1 to 12, characterised in that during the wet cleaning process the oxidation of the cleaning liquid is effected in several stages during which the absorbent material from the dry cleaning process and, if required, from the pre-purifying stage, is added in such quantities as may be required and, if required, calcium hydroxide or milk of lime is added to the last stage in such quantities that the pH value of the liquid increases only very slightly from stage to stage and only climbs to about 7.5 in the last stage.

14. Process according to one or more of claims 1 to 13, characterised in that in the dry cleaning process the gas with the absorbent material falls from top to bottom through a fibrous filter of which not more than 2% on average of the filter surface is being cleaned off at any one time.

15. Apparatus to conduct the process according to claim 14, characterised in that the filter elements are of a height of more than 3.5 m and preferably of about 5 m and that the filter surfaces are provided with support bars or support rings for the absorbent material.

FIG.1

FIG. 2

0 044 916

FIG. 3

0 044 916

FIG.4